# EUROPEAN PATENT SPECIFICATION

(11) **EP 3 240 499 B1**
(45) Date of publication and mention of the grant of the patent: **30.12.2020**
(21) Application number: 16708881.4
(22) Date of filing: 24.02.2016
(51) Int. Cl.: A61C 17/34

(54) **ELECTRIC TOOTHBRUSH**
ELEKTRISCHE ZAHNBÜRSTE
BROSSE À DENTS ÉLECTRIQUE

(30) Priority: 25.02.2015 JP 2015035752
(43) Date of publication of application: 08.11.2017
(73) Proprietor: Colgate-Palmolive Company, New York, NY 10022 (US); Omron Healthcare Co., Ltd., Kyoto 617-0002 (JP)
(72) Inventor: HATA, Yasunori, Muko-shi Kyoto 617-0002 (JP); TONE, Tadashi, Muko-shi Kyoto 617-0002 (JP); YOSHIDA, Hideaki, Muko-shi Kyoto 617-0002 (JP)
(74) Representative: Thum, Bernhard
(86) International application number: PCT/US2016/019332
(87) International publication number: WO 2016/138115

(56) References cited:
- JP-A- 2011 143 057
- US-A1- 2015 020 325

## Description

### BACKGROUND

Electric or powered toothbrushes that are currently available in the market have a number of constructing parts. Such parts are, for example: a body for holding a battery and an electric circuit board; a DC motor; an eccentric shaft connected to the DC motor; and a stem for holding the eccentric shaft and the DC motor. In the motor receiving cavity, detent protrusions are provided for securing the DC motor within the cavity. However, because the stem is typically formed from a synthetic resin, it is difficult to form the cavity through a single injection molding process. Also, the vibration of the eccentric shaft is transmitted through the motor and the stem to the bristle rather than directly to the stem, which results in a reduction in power and the production of excessive noise. Furthermore, the motor is located close to the tooth cleaning elements, which requires a small sized motor and results in low vibration power. Finally, the weight balance of the existing electric toothbrushes is difficult to adjust because the location of the motor is limited. Thus, a need exists for an electric toothbrush that addresses the above- noted issues in the existing devices of this type.

US 2015/020325 A1 describes an electric toothbrush comprising a main body including a case, a motor an eccentric rod with a weight part, and a stem, wherein the motor is connected to a predetermined power supply incorporated in the case. Stem has a cylinder shape and a first leading end part which is closed and holds a replacement brush. Eccentric rod has a first end which is connected to a bearing part of the stem, and further has a second end side connected to a driving shaft of the motor. JP 2011 143057 A describes an electric toothbrush with a motor provided in a stem thereof.

### BRIEF SUMMARY

The present invention is directed to an electric toothbrush with the features of claim 1. Further embodiments are provided in the dependent claims 2 to 15. An electric toothbrush useful for understanding the invention includes a stem member on which a replaceable toothbrush is mounted. The stem member is made of synthetic resin and has a cavity for accommodating a DC motor and a vibration shaft connected to the DC motor. One end of the cavity is opened for inserting the DC motor and the vibration shaft together, and the other end thereof is closed. A free end of the vibration shaft is rotatably supported at the closed end of the cavity. The cavity has a cone-shaped wall so that the DC motor is firmly held in the cavity by a rigid contact between a shoulder portion of the DC motor and the cone-shaped wall.

One example useful for understanding the invention is an electric toothbrush comprising: an elongated body portion having a cylindrical room which accommodates a battery and an electric circuit board, said elongated body portion having a first end and a second end; a stem member made of a synthetic resin and having an elongated cavity with a closed end and an open end, in which the open end of the stem member is connected to the first end of the elongated body portion, said elongated cavity having a cone-shaped wall extending from the open end towards the closed end of the elongated cavity such that the size of the opening of the cone-shaped wall close to the open end is wide and is gradually narrowed towards a middle point of the elongated cavity which is located between the closed end and the open end, said elongated cavity further having a recessed hole formed at the closed end such that an axis of the recessed hole is in alignment with an axis of the cone-shaped wall; a replaceable brushbrush mounted on the stem member; a DC motor inserted in the elongated cavity from the open end and firmly held in the elongated cavity by a rigid contact between a shoulder portion and/or side surface of the DC motor and the cone- shaped wall; and a vibration shaft having one end connected to the DC motor and another end formed with an axial shaft portion which is rotatably inserted into the recessed hole, said vibration shaft having an eccentric shaft whose gravity center is located at a position deviated from an axis of the DC motor, wherein a first distance between the gravity center of the eccentric shaft and the axial shaft portion is less than a second distance between the shoulder portion of the DC motor and the gravity center.

Another example useful for understanding the invention is an electric toothbrush comprising: an elongated body portion having an interior cavity which accommodates a battery and an electric circuit board, said elongated body portion having a first end and a second end; a stem member configured to receive a replaceable brush removeably mounted thereon, the stem member having an elongated cavity with a closed end and an open end, the open end being connected to the first end of the elongated body portion, said elongated cavity defined by an interior wall at least a portion of which tapers from the open end towards the closed end, said elongated cavity further having a recessed hole formed at the closed end; a vibration shaft having an end formed with an axial shaft portion which is rotatably inserted into the recessed hole at a first contact point, said vibration shaft having an eccentric shaft with a gravity center; a DC motor disposed at least partially in the elongated cavity and connected to another end of the vibration shaft opposite the axial shaft portion, wherein a shoulder portion and/or a side surface of the DC motor contacts the interior wall of the elongated cavity at a second contact point, wherein the gravity center of the eccentric shaft is offset from an axis of the DC motor; and wherein a first distance between a gravity center of the eccentric shaft and the first contact point is less than a second distance between the gravity center and the second contact point.

The invention is an electric toothbrush comprising: an elongated body portion having an interior cavity which accommodates a battery and an electric circuit board; a stem member having an elongated cavity with a closed end and an open end, the open end being adjacent to the elongated body portion, said elongated cavity having a cone- shaped wall extending from the open end towards the closed end of the elongated cavity such that a cross-sectional area of the elongated cavity gradually decreases from the open end towards a middle point of the elongated cavity which is located between the closed end and the open end, said elongated cavity further having a recessed hole formed at the closed end, wherein the stem member is configured to receive a replaceable brush removeably mounted thereon; a DC motor positioned in the elongated cavity and such that a shoulder portion and/or a side surface of the DC motor is in contact with the cone-shaped wall; and a vibration shaft having one end connected to the DC motor and another end formed with an axial shaft portion which is rotatably inserted into the recessed hole, said vibration shaft having an eccentric shaft with a gravity center, wherein a first distance between the gravity center of the eccentric shaft and the axial shaft portion is less than a second distance between the shoulder portion of the DC motor and the gravity center.

According to a preferred embodiment, the vibration shaft comprises an extension shaft and the eccentric shaft which are connected in alignment with each other such that the extension shaft is located between the DC motor and the eccentric shaft.

According to a preferred embodiment, the cone-shaped wall is formed by a wall surrounding all around the DC motor.

According to a preferred embodiment, the cone-shaped wall is formed by a plurality of ribs forming wall segments surrounding intermittently around the DC motor.

According to a preferred embodiment, an upper portion of the elongated body portion is bent with respect to a lower portion thereof.

According to a preferred embodiment, said elongated cavity has a receiving corner at a narrowed end of the cone-shaped wall.

According to a preferred embodiment, a third distance between the first end of the elongated body portion and the portion of the DC motor is less than the second distance.

According to a preferred embodiment, the cone-shaped wall is formed by a curved wall which is curved from the open end towards the closed end.

According to a preferred embodiment, the cone-shaped wall is formed by an upright wall portion and a slanted wall portion.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a perspective view of an electric toothbrush according to a preferred embodiment of the present invention.
Fig. 2A is an exploded view of the electric toothbrush shown in Fig. 1.
Fig. 2B is a perspective view of a vibration shaft shown in Fig. 2A.
Fig. 2C is a cross-sectional view of a stem member inserted with the vibration shaft and the DC motor.
Fig. 2D is an enlarged cross-section view of a portion 2D shown in Fig. 2C.
Fig. 3A is view similar to Fig. 2D, but particularly showing a first modification of a cone-shaped wall formed in a stem member.
Fig. 3B is a bottom view of the stem member shown in Fig. 3A.
Fig. 3C is an enlarged view, and particularly showing a second modification of a cone-shaped wall formed in a stem member.
Fig. 3D is an enlarged view, and particularly showing a third modification of a cone-shaped wall formed in a stem member.
Fig. 4 is a view similar to Fig. 2C, but particularly showing a modification of an elongated body portion.

### DETAILED DESCRIPTION

The following description of the preferred embodiment(s) is merely exemplary in nature and is in no way intended to limit the invention, its application, or uses.

The description of illustrative embodiments according to the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

As used throughout, ranges are used as shorthand for describing each and every value that is within the range. Any value within the range can be selected as the terminus of the range. In the event of a conflict in a definition in the present disclosure and that of a cited reference, the present disclosure controls.

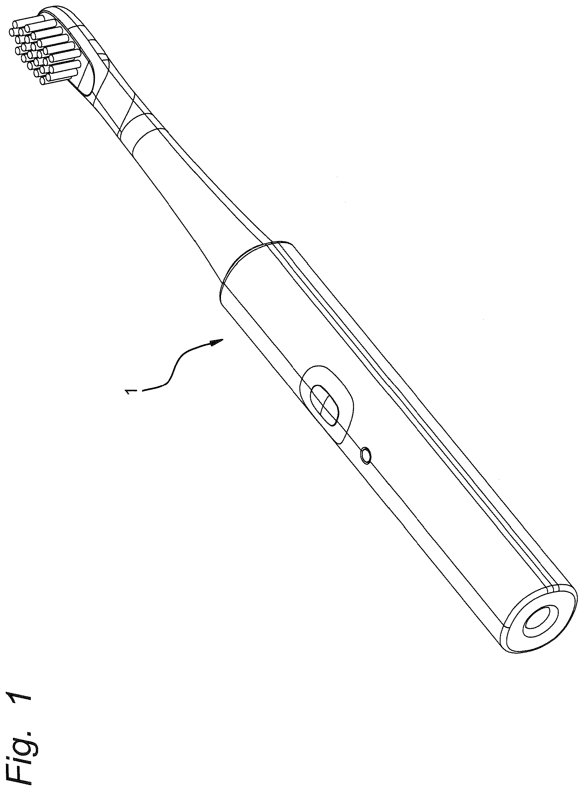

Referring to Fig. 1, an electric toothbrush 1 according to a preferred embodiment of the present invention is shown.

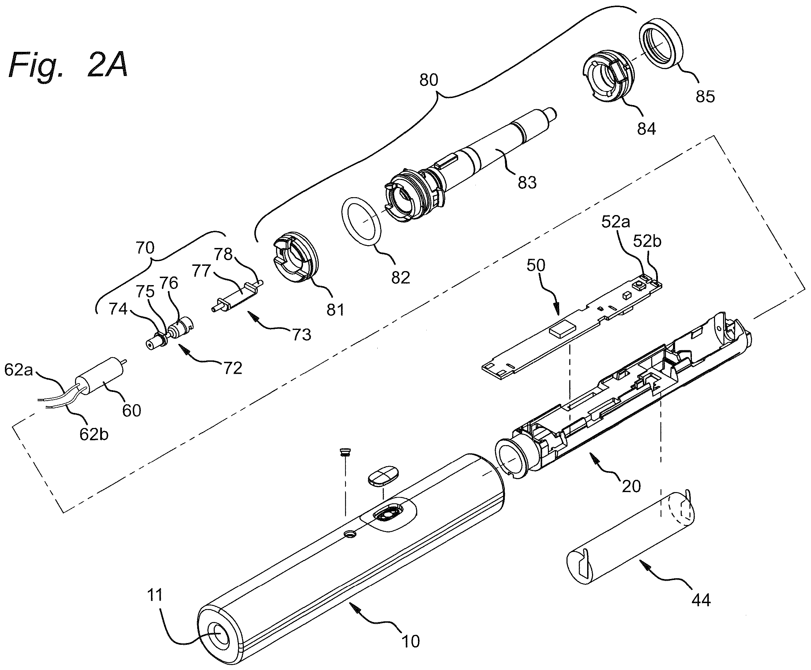

Referring to Fig. 2A, an exploded view of the electric toothbrush 1 is shown. Electric toothbrush 1 includes an elongated body portion 10, a chassis 20, a rechargeable battery 44, an elongated circuit board 50, a DC motor 60 having a cylindrical body, a vibration shaft 70 and a stem arrangement 80. A replaceable brush

(not shown) is to be mounted on the stem arrangement 80. The replaceable brush covers the stem arrangement 80 completely or partially.

The body portion 10 is capable of being gripped or grasped by a user and has a recess 11 at its bottom end for receiving therein a projection of a battery charger. The body portion 10 has an interior cavity, which may be for example, cylindrical, for accommodating the chassis 20, the rechargeable battery 44, and circuit board 50.

The stem arrangement 80 includes a bottom support member 81, a packing ring 82, a stem member 83, a top support member 84 and a top ring 85. The stem member 83 has an elongated cavity 86 for receiving the vibration shaft 70 and the DC motor 60.

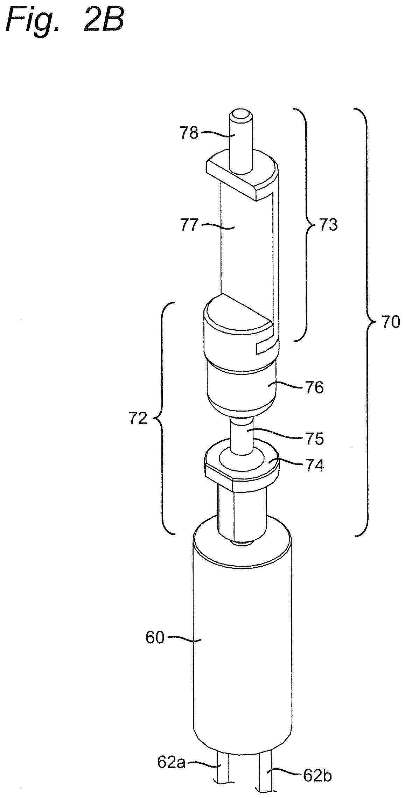

Referring to Fig. 2B, the vibration shaft 70 includes an extension shaft 72 made of synthetic resin and an eccentric shaft 73 made of metal. The extension shaft 72 may be integrally formed by a material called POM (polyoxymethylene) manufactured by, for example, POLYPLASTICS CO., LTD. JAPAN. The grade of the material POM may be NW-02 or grades, such as M90-44.

As shown in Fig. 2B, the extension shaft 72 of the vibration shaft 70 includes a collar portion 74 provided close to a bottom end, a resilient shaft portion 75 and a connecting portion 76 which are integrally formed by POM in the exemplified embodiment. The bottom end face of the extension shaft 72 is formed with a recess to be engaged with a shaft of the DC motor 60. DC motor 60 has two wires 62a and 62b extending from a bottom face thereof for electric connection with the circuit board 50.

The eccentric shaft 73 of the vibration shaft 70 includes an eccentric portion 77 and an axial shaft portion 78. The bottom end of the eccentric portion 77 is firmly connected to the connecting portion 76 by molding and the upper end of the eccentric portion 77 is provided with the axial shaft portion 78.

When the vibration shaft 70 rotates about its axis by the DC motor 60, the eccentric portion 77 generates a high frequency vibration which is transmitted to the stem arrangement 80 and to the brush (not shown). The resilient shaft portion 75 has a flexibility to receive the high frequency vibration of the eccentric portion 77.

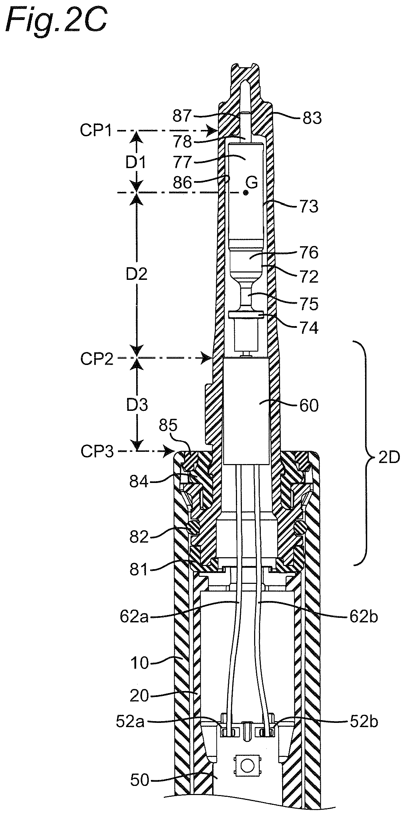

Referring to Fig. 2C, the stem member 83 may also be formed by POM. A recessed hole 87 is formed at the end of the elongated cavity 86. The recessed hole 87 slidably receives the axial shaft portion 78. The elongated cavity 86 accommodates therein the vibration shaft 70 and the DC motor 60. The vibration shaft 70 is freely rotated in the elongated cavity 86. The recessed hole 87 serves as a bearing for freely holding the axial shaft portion 78. The vibration shaft 70 freely rotates inside the elongated cavity 86 even under high frequency vibration.

Since the recessed hole 87 serves as the bearing, it is not necessary to provide a separate bearing arrangement for rotatably holding the axial shaft portion 78.

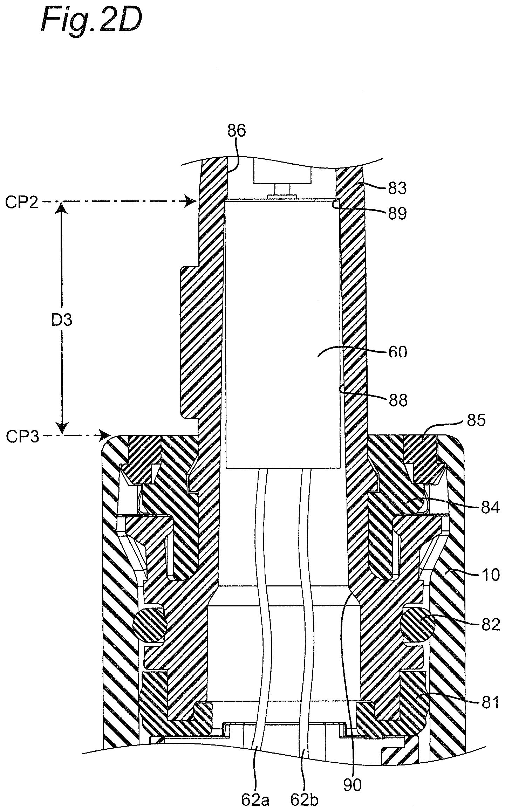

A portion 2D indicated in Fig. 2C is shown in an enlarged scale in Fig. 2D.

Referring to Fig. 2D, a lower end portion of the stem member 83 is shown in detail. The elongated cavity 86 has an open end at the lower end of the stem member 83 so that the two wires 62a and 62b of DC motor 60 extends through the open end of the elongated cavity and through an opening formed in the chassis 20, and terminates at electrodes 52a and 52b formed on the circuit board 50, as shown in Fig. 2C.

Referring back to Fig. 2D, the elongated cavity 86 has a cone-shaped wall 88 and a receiving corner 89 at the end of the cone-shaped wall 88. The cone-shaped wall 88 is widest at the open end of the elongated cavity 86, and is gradually narrowed towards a middle point of the elongated cavity, such as at the receiving corner 89. The inner diameter of the cone-shaped wall 88 at the receiving corner 89 is about the same or slightly smaller than the outer diameter of the DC motor 60. The inner diameter of the cone-shaped wall 88 at the open end of the elongated cavity 86 is between 105% and 145% of, such as for example but not limited to 132% of, the outer diameter of the DC motor 60. The cone-shaped wall 88 is formed with a wall surrounding all around the DC motor 60 without any intermittence. Also, the cone-shaped wall is straight from the open end to the receiving corner 89. According to a variation, the cone-shaped wall 88 may have a step portion or a slanted step portion 90 at which the inner diameter of the cylindrical cavity 86 is widened abruptly.

The DC motor 60 together with the vibration shaft 70 is inserted into the elongated cavity 86 from the open end, and forcibly pushed in until the upper side edge, i.e., a shoulder portion, of the DC motor 60 is fittingly held at the end of the cone-shaped wall 88 such that the shoulder portion and/or side surface, such as upper side surface, of the DC motor 60 makes a rigid contact with the cone-shaped wall. The top surface of the DC motor 60 may abut against the receiving corner 89. If necessary, a bonding agent may be applied between the shoulder portion and the cone-shaped wall, or between the top surface of the DC motor 60 and the receiving corner 89. When the shoulder portion and/or side surface of the DC motor 60 is firmly held in the cone-shaped wall 88, the axial shaft portion 78 is slidably inserted into the recessed hole 87. It is apparent from the above that an axis of the recessed hole 87 is in alignment with an axis of the cone-shaped wall 88.

As shown in Fig. 2C, a vibration generator defined by the DC motor 60 and vibration shaft 70 is positioned inside the stem member 83 such that the axial direction of the DC motor 60 is in alignment with the axial direction of the vibration shaft 70, and that the vibration generator is held in the elongated cavity 86 at two contact points CP1 and CP2. Contact point CP1 is a point anywhere in the axial shaft portion 78 and, more specifically, a point where the axial shaft portion 78 contacts the recessed hole 87, and contact point CP2 is at a point where the shoulder portion of the DC motor 60 contacts the cone-shaped wall 88.

A distance D1 between contact point CP1 and a gravity center G of eccentric shaft 73 is smaller than a distance D2 between contact point CP2 and the gravity center G of eccentric shaft 73 (D1<D2). This arrangement enables the location of the eccentric shaft 73 to be relatively close to the contact point CP1, i.e., close to a position where the bristle of the toothbrush is located. Thus, the vibration generated by the eccentric shaft 73 can be effectively transmitted through axial shaft portion 78 and recessed hole 87 to the bristle of the toothbrush. According to a preferred embodiment of the invention, distance D2 is 10mm or greater, such as 21.3mm. Furthermore, DC motor 60 is located within a lower side of the stem member 83, i.e., a side of a lower half-length (a side away from the bristle of the toothbrush) of full length of the stem member 83. This arrangement provides an appropriate weight balance of the stem member 83 loaded with the vibration generator, and eventually an appropriate weight balance of the electric toothbrush 1. Also, this arrangement gives a freedom to select a larger size of DC motor 60, in comparison to a case where the DC motor is located in a side of an upper-half length of full length of the stem member 83. In order to provide a sufficient distance between eccentric shaft 73 and DC motor 60, the extension shaft 72 is provided. In a modification, it is possible to connect DC motor 60 directly to the eccentric shaft 73 without using any extension shaft 72.

Furthermore, the elongated cavity 86 is widest at the open end and is gradually narrowed towards the receiving corner 89 and thereafter the diameter is narrowed at the receiving corner 89 and keeps a constant width or further narrowed towards the closed end until reaching the recessed hole 87. Thus, the molding of the stem member 83 with the elongated cavity 86 gradually narrowed towards the closed end can be easily formed by an injection molding.

Furthermore, DC motor 60 can be held in a position without using any screws, but only by a single push and the resulting friction fit. Accordingly, the assembly of the stem member 83 loaded with the vibration generator is simple and can be done very easily.

Referring again to Fig. 2A, after placing the rechargeable battery 44 and the circuit board 50 at proper positions in the chassis 20, the ends of the two wires 62a and 62b are soldered to electrodes 52a and 52b, respectively, of the circuit board 50. Then, the chassis 20 carrying the battery 44 and circuit board 50 is inserted into the body portion 10. During the insertion, stem member 83 is also partly inserted into the body portion 10 together with the bottom support member 81, packing ring 82, top support member 84 and top ring 85, as shown in Fig. 2C. Accordingly the stem member 83 and the body portion 10 are firmly held together in a watertight manner.

It is to be noted that stem member 83 and body portion 10 can be formed integrally. In this case a bottom end of the body portion 10 where the recess 11 is formed should be opened to allow the insertion of an assembly of the vibration shaft 70, DC motor 60, and chassis 20 mounted with battery 44 and circuit board 50. After the assembly is inserted from the bottom open end, the open end should be tightly closed by a cap member.

Referring to Fig. 2D, the most top position of the contact point between the body portion 10 and the stem member 83 is a contact point CP3. In other words, contact point CP3 corresponds to an upper end of the elongated body portion 10. According to a preferred embodiment, DC motor 60 intersects with a level of the contact point CP3. In other words, the length of DC motor 60 is longer than a distance D3 between contact points CP2 and CP3. In some arrangements, it is possible to make the length of DC motor 60 shorter than a distance between contact points CP2 and CP3. Furthermore the distances are so selected that D3 is less than D2 (D3<D2), as apparent from Fig. 2C. This arrangement has an advantage of producing an appropriate vibration of the stem member 83.

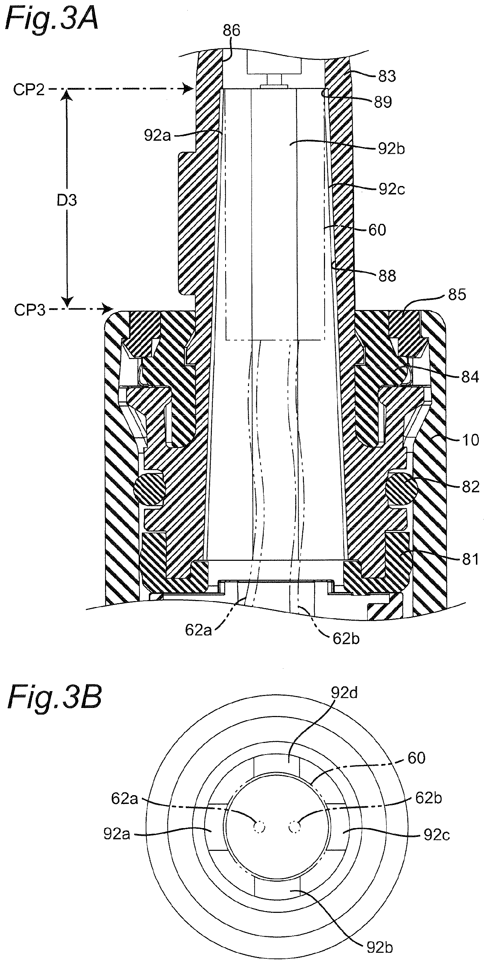

Referring to Figs. 3A and 3B, a first modification of the cone-shaped wall is shown. The cone-shaped wall is defined by a plurality of, such as four ribs 92a, 92b, 92c and 92d, located in the cylindrical cavity 86 extending parallel to each other from the receiving corner 89 to the open end of the elongated cavity 86. The four ribs 92a, 92b, 92c and 92d are spaced equidistantly from each other along the circumference of the open end of the elongated cavity 86. The free end surfaces of the four ribs define wall segments surrounding intermittently around the DC motor, as best shown in Fig. 3B.

The number of ribs can be two or greater. Also, the ribs may extend from the receiving corner 89 to an intermediate place somewhere between the receiving corner 89 to the open end of the elongated cavity 86, such as to the slanted step portion 90 (see FIG. 2D).

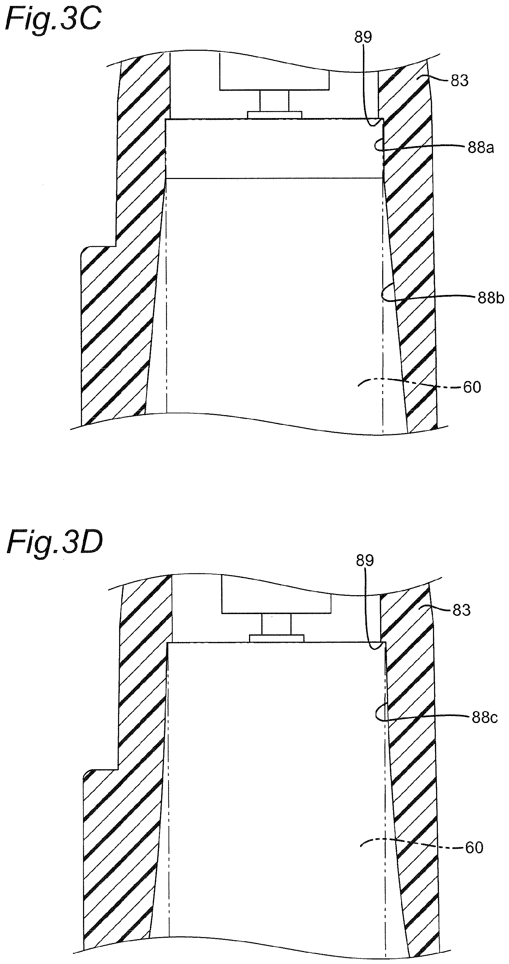

Referring to Fig. 3C, a second modification of the cone-shaped wall is shown. The cone-shaped wall 88 is formed by an upright wall portion (88a), and a slanted wall portion 88b. At upright wall portion 88a, the inner diameter of the wall is constant, i.e., nearly equal to the diameter of the DC motor 60. At slanted wall portion 88b, the inner diameter of the wall increases from the end of the upright wall portion 88a towards the open end of the elongated cavity 86.

Referring to Fig. 3D, a third modification of the cone-shaped wall is shown. The cone-shaped wall 88c is curved from the open end to the closed end. Preferably, the curvature becomes great towards the open end.

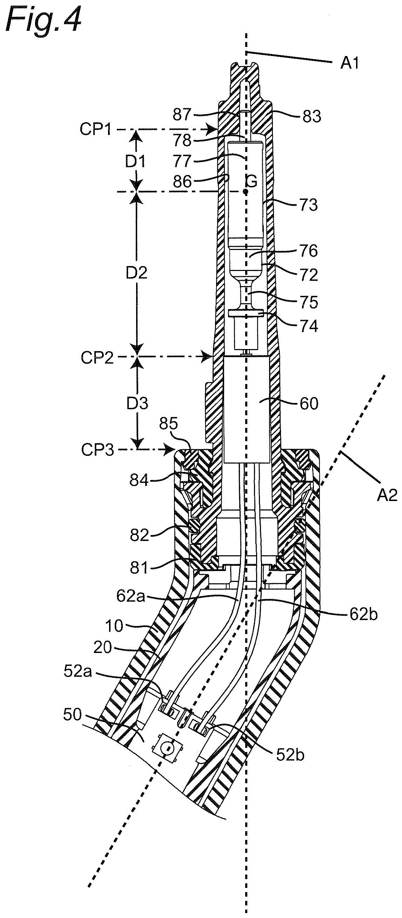

Referring to Fig. 4, a modification of the body portion 10 is shown which is bent at neck portion thereof. The body portion 10 has an upper portion bent with respect to a lower portion thereof. Therefore, an axis A1 of the upper portion of body portion 10 is inclined with respect to an axis A2 of the lower portion thereof. Even in such an arrangement, since the DC motor 60 is not located in the body portion 10, but in the stem member 83, it is not necessary to provide any flexible shaft that is bent between the DC motor 60 and the eccentric shaft 73. Therefore, a freedom of designing the body portion 10 is increased.

Furthermore, according to one embodiment of the present invention, the DC motor 60 which is described as having a cylindrical body can be arranged to have a cone-shaped body such that the wide side of the cone-shaped body is located close to the open end of the elongated cavity 86 and the narrow side of the cone-shaped body is located close to the closed end of the elongated cavity 86. In this case, the outer wall of the cone-shaped body is more upright, i.e., less inclined with respect to the axis of the DC motor, than the cone shaped wall 88.

While the invention has been described with respect to specific examples including presently preferred modes of carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the scope of the invention should be construed broadly as set forth in the appended claims.

## Claims

1. An electric toothbrush (1) comprising:
an elongated body portion (10) having an interior cavity which accommodates a battery (44) and an electric circuit board (50);
a stem member (83) having an elongated cavity (86) with a closed end and an open end, the open end being adjacent to the elongated body portion (10), said elongated cavity (86) having a cone-shaped wall (88) extending from the open end towards the closed end of the elongated cavity (86) such that a cross-sectional area of the elongated cavity (86) gradually decreases from the open end towards a middle point of the elongated cavity (86) which is located between the closed end and the open end, said elongated cavity (86) further having a recessed hole (87) formed at the closed end, wherein the stem member (83) is configured to receive a replaceable brush removeably mounted thereon;
a DC motor (60) positioned in the elongated cavity (86) such that a shoulder portion and/or a side surface of the DC motor (60) is in contact with the cone-shaped wall (88); and
a vibration shaft (70) having one end connected to the DC motor (60) and another end formed with an axial shaft portion (78) which is rotatably inserted into the recessed hole (87), said vibration shaft (70) having an eccentric shaft (73) with a gravity center (G),
wherein a first distance (D1) between the gravity center (G) of the eccentric shaft (73) and the axial shaft portion (78) is less than a second distance (D2) between the shoulder portion of the DC motor (60) and the gravity center (G).

2. The electric toothbrush (1) according to claim 1, wherein the cone-shaped wall (88) circumferentially surrounds the DC motor (60) along an entirety of a length of the DC motor (60).

3. The electric toothbrush (1) according to claim 1, wherein the cone-shaped wall (88) is formed by a plurality of ribs (92a, 92b, 92c, 92d) forming wall segments surrounding intermittently around the DC motor (60).

4. The electric toothbrush (1) according to any preceding claim, wherein said elongated cavity (86) has a receiving corner (89) at a narrowed end of the cone-shaped wall (88), and further optionally wherein a top surface of the DC motor (60) is in surface contact with the receiving corner (89).

5. The electric toothbrush (1) according to claim 4 wherein an inner diameter of the cone-shaped wall (88) at the receiving corner (89) is the same or slightly smaller than a maximum outer diameter of the DC motor (60), and further optionally wherein the inner diameter of the cone-shaped wall (88) at the open end of the elongated cavity (86) is between 105% and 145% of the maximum outer diameter of the DC motor (60).

6. The electric toothbrush (1) according to any preceding claim wherein at least a portion of the side surface of the DC motor (60) is spaced apart from the cone-shaped wall (88).

7. The electric toothbrush (1) according to any preceding claim, wherein a third distance (D3) between a first end of the elongated body portion (10) from which the stem member (83) extends and the shoulder portion of the DC motor (60) is less than the second distance (D2).

8. The electric toothbrush (1) according to any one of claims 1 to 7, wherein the cone-shaped wall (88) is formed by an upright wall portion (88a) and a slanted wall portion (88b).

9. The electric toothbrush (1) according to any preceding claim, wherein the DC motor (60) has a cylindrical body.

10. The electric toothbrush (1) according to any one of claims 1 to 8, wherein the DC motor (60) has a cone-shaped body.

11. The electric toothbrush (1) according to any preceding claim wherein an axis of the recessed hole (87) is aligned with an axis of the cone-shaped wall (88).

12. The electric toothbrush (1) according to any preceding claim wherein the stem member (83) has a length and is divided into a lower-half portion and an upper-half portion each extending for half of the length of the stem member (83), and wherein the DC motor (60) is located entirely within the lower-half portion of the stem member (83).

13. The electric toothbrush (1) according to any preceding claim wherein the elongated body portion (10) extends from a first end to a second end, the stem member (83) extending from the first end, and wherein a portion of the motor (60) extends to below the first end of the elongated body portion (10).

14. The electric toothbrush (1) according to claim 13 wherein the first end of the elongated body portion (10) lies along a plane that intersects the motor (60).

15. An electric toothbrush (1) according to any preceding claim wherein
the axial shaft portion (78) is positioned within the recessed hole (87) at a first contact point (CP1);
the shoulder portion of the DC motor (60) contacts the cone-shaped wall (88) at a second contact point (CP2); and
a first distance (D1) between the gravity center (G) of the eccentric shaft (73) and the first contact point (CP1) is less than a second distance (D2) between the gravity center (G) and the second contact point (CP2).

## Patentansprüche

1. Elektrische Zahnbürste (1), aufweisend:
einen länglichen Körperabschnitt (10), der einen inneren Hohlraum aufweist, welcher eine Batterie (44) und eine elektrische Leiterplatte (50) beherbergt;
ein Schaftelement (83), das einen länglichen Hohlraum (86) mit einem geschlossenen Ende und einem offenen Ende aufweist, wobei das offene Ende an den länglichen Körperabschnitt (10) angrenzt, wobei der längliche Hohlraum (86) eine kegelförmige Wand (88) aufweist, die sich von dem offenen Ende in Richtung des geschlossenen Endes des länglichen Hohlraums (86) so erstreckt, dass eine Querschnittsfläche des länglichen Hohlraums (86) von dem offenen Ende in Richtung eines Mittelpunkts des länglichen Hohlraums (86), der sich zwischen dem geschlossenen Ende und dem offenen Ende befindet, allmählich abnimmt, wobei der längliche Hohlraum (86) ferner ein eingelassenes Loch (87) aufweist, das an dem geschlossenen Ende ausgebildet ist, wobei das Schaftelement (83) dazu konfiguriert ist, eine austauschbare Bürste aufzunehmen, die abnehmbar daran angebracht ist;
einen Gleichstrommotor (60), der in dem länglichen Hohlraum (86) so positioniert ist, dass ein Schulterabschnitt und/oder eine Seitenfläche des Gleichstrommotors (60) mit der kegelförmigen Wand (88) in Kontakt ist; und
eine Vibrationswelle (70), die ein Ende, das mit dem Gleichstrommotor (60) verbunden ist, und ein anderes Ende, das mit einem drehbar in das eingelassene Loch (87) eingesetzten axialen Wellenabschnitt (78) ausgebildet ist, aufweist, wobei die Vibrationswelle (70) eine Exzenterwelle (73) mit einem Schwerpunkt (G) aufweist,
wobei ein erster Abstand (D1) zwischen dem Schwerpunkt (G) der Exzenterwelle (73) und dem axialen Wellenabschnitt (78) kleiner als ein zweiter Abstand (D2) zwischen dem Schulterabschnitt des Gleichstrommotors (60) und dem Schwerpunkt (G) ist.

2. Elektrische Zahnbürste (1) nach Anspruch 1, wobei die kegelförmige Wand (88) den Gleichstrommotor (60) entlang einer gesamten Länge des Gleichstrommotors (60) in Umfangsrichtung umgibt.

3. Elektrische Zahnbürste (1) nach Anspruch 1, wobei die kegelförmige Wand (88) durch eine Mehrzahl von Rippen (92a, 92b, 92c, 92d) gebildet ist, die Wandsegmente bilden, die den Gleichstrommotor (60) intermittierend umgeben.

4. Elektrische Zahnbürste (1) nach einem der vorhergehenden Ansprüche, wobei der längliche Hohlraum (86) eine Aufnahmeecke (89) an einem verengten Ende der kegelförmigen Wand (88) aufweist, und wobei ferner optional eine Oberfläche des Gleichstrommotors (60) in Flächenkontakt mit der Aufnahmeecke (89) steht.

5. Elektrische Zahnbürste (1) nach Anspruch 4, wobei ein Innendurchmesser der kegelförmigen Wand (88) an der Aufnahmeecke (89) gleich oder etwas kleiner als ein maximaler Außendurchmesser des Gleichstrommotors (60) ist, und wobei ferner optional der Innendurchmesser der kegelförmigen Wand (88) an dem offenen Ende des länglichen Hohlraums (86) zwischen 105% und 145% des maximalen Außendurchmessers des Gleichstrommotors (60) beträgt.

6. Elektrische Zahnbürste (1) nach einem der vorhergehenden Ansprüche, wobei mindestens ein Abschnitt der Seitenfläche des Gleichstrommotors (60) von der kegelförmigen Wand (88) beabstandet ist.

7. Elektrische Zahnbürste (1) nach einem der vorhergehenden Ansprüche, wobei ein dritter Abstand (D3) zwischen einem ersten Ende des länglichen Körperabschnitts (10), von dem sich das Schaftelement (83) erstreckt, und dem Schulterabschnitt des Gleichstrommotors (60) kleiner als der zweite Abstand (D2) ist.

8. Elektrische Zahnbürste (1) nach einem der Ansprüche 1 bis 7, wobei die kegelförmige Wand (88) durch einen aufrechten Wandabschnitt (88a) und einen schrägen Wandabschnitt (88b) gebildet ist.

9. Elektrische Zahnbürste (1) nach einem der vorhergehenden Ansprüche, wobei der Gleichstrommotor (60) einen zylindrischen Körper aufweist.

10. Elektrische Zahnbürste (1) nach einem der Ansprüche 1 bis 8, wobei der Gleichstrommotor (60) einen kegelförmigen Körper aufweist.

11. Elektrische Zahnbürste (1) nach einem der vorhergehenden Ansprüche, wobei eine Achse des eingelassenen Lochs (87) mit einer Achse der kegelförmigen Wand (88) fluchtet.

12. Elektrische Zahnbürste (1) nach einem der vorhergehenden Ansprüche, wobei das Schaftelement (83) eine Länge aufweist und in eine untere Hälfte und eine obere Hälfte unterteilt ist, die sich jeweils über die Hälfte der Länge des Schaftelements (83) erstrecken, und wobei der Gleichstrommotor (60) vollständig innerhalb der unteren Hälfte des Schaftelements (83) angeordnet ist.

13. Elektrische Zahnbürste (1) nach einem der vorhergehenden Ansprüche, wobei sich der längliche Körperabschnitt (10) von einem ersten Ende zu einem zweiten Ende erstreckt, wobei sich das Schaftelement (83) von dem ersten Ende erstreckt, und wobei sich ein Abschnitt des Motors (60) bis unter das erste Ende des länglichen Körperabschnitts (10) erstreckt.

14. Elektrische Zahnbürste (1) nach Anspruch 13, wobei das erste Ende des länglichen Körperabschnitts (10) entlang einer Ebene liegt, die den Motor (60) schneidet.

15. Elektrische Zahnbürste (1) nach einem der vorhergehenden Ansprüche, wobei
der axiale Schaftabschnitt (78) innerhalb des eingelassenen Lochs (87) an einem ersten Kontaktpunkt (CP1) positioniert ist;
der Schulterabschnitt des Gleichstrommotors (60) die kegelförmige Wand (88) an einem zweiten Kontaktpunkt (CP2) berührt; und
ein erster Abstand (D1) zwischen dem Schwerpunkt (G) der Exzenterwelle (73) und dem ersten Kontaktpunkt (CP1) kleiner als ein zweiter Abstand (D2) zwischen dem Schwerpunkt (G) und dem zweiten Kontaktpunkt (CP2) ist.

## Revendications

1. Brosse à dents électrique (1) comprenant :
une partie corps (10) allongée ayant une cavité intérieure qui loge une batterie (44) et une carte de circuit électrique (50) ;
un élément de tige (83) ayant une cavité (86) allongée avec une extrémité fermée et une extrémité ouverte, l'extrémité ouverte étant adjacente à la partie corps (10) allongée, ladite cavité (86) allongée ayant une paroi en forme de cône (88) s'étendant de l'extrémité ouverte vers l'extrémité fermée de la cavité (86) allongée de telle sorte qu'une aire de section transversale de la cavité (86) allongée diminue progressivement de l'extrémité ouverte vers un point médian de la cavité (86) allongée qui est situé entre l'extrémité fermée et l'extrémité ouverte, ladite cavité (86) allongée ayant en outre un trou en retrait (87) formé à l'extrémité fermée, dans lequel l'élément de tige (83) est conçu pour recevoir une brosse remplaçable montée de manière amovible sur celui-ci ;
un moteur à courant continu (60) positionné dans la cavité (86) allongée de telle sorte qu'une partie d'épaulement et/ou une surface latérale du moteur à courant continu (60) est en contact avec la paroi en forme de cône (88) ; et
un arbre de vibration (70) ayant une extrémité connectée au moteur à courant continu (60) et une autre extrémité formée avec une partie d'arbre axial (78) qui est insérée en rotation dans le trou en retrait (87), ledit arbre de vibration (70) ayant un arbre excentré (73) avec un centre de gravité (G),
dans lequel une première distance (D1) entre le centre de gravité (G) de l'arbre excentré (73) et la partie d'arbre axial (78) est inférieure à une deuxième distance (D2) entre la partie d'épaulement du moteur à courant continu (60) et le centre de gravité (G).

2. Brosse à dents électrique (1) selon la revendication 1, dans laquelle la paroi en forme de cône (88) entoure de manière circonférentielle le moteur à courant continu (60) sur la totalité d'une longueur du moteur à courant continu (60).

3. Brosse à dents électrique (1) selon la revendication 1, dans laquelle la paroi en forme de cône (88) est formée par une pluralité de nervures (92a, 92b, 92c, 92d) formant des segments de paroi entourant par intermittence le moteur à courant continu (60).

4. Brosse à dents électrique (1) selon l'une quelconque des revendications précédentes, dans laquelle ladite cavité (86) allongée a un coin de réception (89) au niveau d'une extrémité rétrécie de la paroi en forme de cône (88), et en outre éventuellement dans laquelle une surface supérieure du moteur à courant continu (60) est en contact de surface avec le coin de réception (89).

5. Brosse à dents électrique (1) selon la revendication 4, dans laquelle un diamètre intérieur de la paroi en forme de cône (88) au niveau du coin de réception (89) est identique ou légèrement inférieur à un diamètre extérieur maximal du moteur à courant continu (60), et en outre éventuellement dans laquelle le diamètre intérieur de la paroi en forme de cône (88) au niveau de l'extrémité ouverte de la cavité (86) allongée est compris entre 105 % et 145 % du diamètre extérieur maximal du moteur à courant continu (60).

6. Brosse à dents électrique (1) selon l'une quelconque des revendications précédentes, dans laquelle au moins une partie de la surface latérale du moteur à courant continu (60) est espacée de la paroi en forme de cône (88).

7. Brosse à dents électrique (1) selon l'une quelconque des revendications précédentes, dans laquelle une troisième distance (D3) entre une première extrémité de la partie corps (10) allongée à partir de laquelle s'étend l'élément de tige (83) et la partie d'épaulement du moteur à courant continu (60) est inférieure à la deuxième distance (D2).

8. Brosse à dents électrique (1) selon l'une quelconque des revendications 1 à 7, dans laquelle la paroi en forme de cône (88) est formée par une partie de paroi verticale (88a) et une partie de paroi inclinée (88b).

9. Brosse à dents électrique (1) selon l'une quelconque des revendications précédentes, dans laquelle le moteur à courant continu (60) a un corps cylindrique.

10. Brosse à dents électrique (1) selon l'une quelconque des revendications 1 à 8, dans laquelle le moteur à courant continu (60) a un corps en forme de cône.

11. Brosse à dents électrique (1) selon l'une quelconque des revendications précédentes, dans laquelle un axe du trou en retrait (87) est aligné avec un axe de la paroi en forme de cône (88).

12. Brosse à dents électrique (1) selon l'une quelconque des revendications précédentes, dans laquelle l'élément de tige (83) a une longueur et est divisé en une moitié inférieure et une moitié supérieure s'étendant chacune sur la moitié de la longueur de l'élément de tige (83), et dans laquelle le moteur à courant continu (60) est situé entièrement à l'intérieur de la moitié inférieure de l'élément de tige (83).

13. Brosse à dents électrique (1) selon l'une quelconque des revendications précédentes, dans laquelle la partie corps (10) allongée s'étend d'une première extrémité à une seconde extrémité, l'élément de tige (83) s'étendant à partir de la première extrémité, et dans laquelle une partie du moteur (60) s'étend jusqu'au-dessous de la première extrémité de la partie corps (10) allongée.

14. Brosse à dents électrique (1) selon la revendication 13, dans laquelle la première extrémité de la partie corps (10) allongée se trouve le long d'un plan qui coupe le moteur (60).

15. Brosse à dents électrique (1) selon l'une quelconque des revendications précédentes, dans laquelle
la partie d'arbre axial (78) est positionnée à l'intérieur du trou en retrait (87) en un premier point de contact (CP1) ;
la partie d'épaulement du moteur à courant continu (60) entre en contact avec la paroi en forme de cône (88) en un second point de contact (CP2) ; et
une première distance (D1) entre le centre de gravité (G) de l'arbre excentré (73) et le premier point de contact (CP1) est inférieure à une deuxième distance (D2) entre le centre de gravité (G) et le second point de contact (CP2).
